# EUROPÄISCHE PATENTSCHRIFT

(11) **EP 3 739 122 B1**
(45) Veröffentlichungstag und Bekanntmachung des Hinweises auf die Patenterteilung: **28.04.2021**
(21) Anmeldenummer: 19174465.5
(22) Anmeldetag: 14.05.2019
(51) Int. Cl.: E01C 19/48

(54) **STRASSENFERTIGER UND VERFAHREN ZUM BESTIMMEN EINER SCHICHTDICKE EINER HERGESTELLTEN EINBAUSCHICHT**
ROAD FINISHER AND METHOD FOR DETERMINING A THICKNESS OF A LAYER OF AN ESTABLISHED INSTALLATION LAYER
FINISSEUSE DE ROUTE ET PROCÉDÉ DE DÉTERMINATION DE L'ÉPAISSEUR DE COUCHE DE ROUTE

(43) Veröffentlichungstag der Anmeldung: 18.11.2020
(73) Patentinhaber: Joseph Vögele AG, 67067 Ludwigshafen (DE)
(72) Erfinder: BUSCHMANN, Martin, 67435 Neustadt (DE); NOLL, Tobias, 76835 Roschbach (DE)
(74) Vertreter: Grünecker Patent- und Rechtsanwälte PartG mbB

(56) Entgegenhaltungen:
- EP-A1- 2 535 456
- EP-A1- 2 535 457
- EP-A1- 2 535 458
- EP-A1- 2 921 588

## Beschreibung

Die Erfindung betrifft einen Straßenfertiger zum Bestimmen der Schichtdicke einer Einbauschicht gemäß dem Anspruch 1 sowie ein Verfahren zum Bestimmen einer Schichtdicke mittels eines Straßenfertigers gemäß dem unabhängigen Anspruch 15.

Beim Bau von Verkehrswegen und Oberflächen werden in der herkömmlichen Praxis Straßenfertiger eingesetzt. Straßenfertiger sind in der Lage, Material z.B. von einem LKW entgegenzunehmen und entsprechend den Voraussetzungen des Straßenbaus einzubauen.

Typischerweise werden auf bekannten Straßenfertigern sogenannte Nivelliersysteme zur Regelung der Ebenheit der eingebauten Schicht eingesetzt. Diese Systeme regeln zumeist eine Höhenlage der am Fertiger angebauten Einbaubohle auf Basis einer abgetasteten Referenz. Als Referenz kommt beispielsweise das Planum, sprich der Untergrund, auf dem sich der Fertiger fortbewegt, eine Rinnenplatte, eine Bordkante oder ein entlang der Einbaustrecke gespannter Leitdraht zum Einsatz. Zur Abtastung der Referenz werden, beispielsweise in US 5,975,473, Höhenfühler eingesetzt. Zunehmend an Bedeutung gewinnen hier sogenannte Multiplexsysteme, die eine relative Höhenlage des Planums und der eingebauten Schicht mittels mehrerer Sensoren abtasten. Daraus wird dann im Prinzip durch Mittelwertsbildung ein Referenzwert zur Höhensteuerung der Einbaubohle berechnet. Dies kann für die linke und die rechte Seite der Einbaubohle mit zwei getrennten Systemen geschehen.

Eine der wesentlichen Einbauzielgrößen ist bekannterweise die hergestellte Schichtdicke der Einbauschicht. Das Einhalten einer vorbestimmten Schichtdicke ist nicht nur ein Qualitätskriterium, sondern hat auch wesentlichen Einfluss auf die Wirtschaftlichkeit des Bauvorhabens. Unterschreitet das Bauunternehmen die geforderte Schichtstärke, dann kann dies im Nachhinein finanzielle Abzüge hervorrufen. Wird hingegen die Schichtstärke überschritten, dann führt dies zu erhöhtem Asphaltverbrauch und damit zu wesentlich erhöhten Kosten. Die Kontrolle der Schichtstärke ist daher für den Einbau wesentlich. Der Bediener des Straßenfertigers muss demzufolge in regelmäßigen Abständen kontrollieren, ob der Straßenfertiger die geforderte Schichtstärke verbaut. Auch heute noch wird eine Kontrolle der Schichtdicke durch herkömmliches manuelles Einstechen von Lehren oder mittels eines Zollstocks durchgeführt. Nachteilig daran ist, dass bei dieser Herangehensweise die Schichtstärke nur punktuell bestimmt wird. Zudem ist eine Prüfschärfe bei manuell durchgeführten Messungen durch das Geschick des Bedieners vorgegeben. Die so ermittelten

Werte sind nicht selten verhältnismäßig ungenau und können natürlich weder für Automatisierungs- noch für Dokumentationszwecke digital verarbeitet werden.

Als weiteres Messverfahren zur Bestimmung der eingebauten Schichtstärke ist die Messung mittels Magnetfeldinduktion bekannt. Hier werden bereits vor dem eigentlichen Straßeneinbau Reflektorfolien aus Metall auf das Planum aufgebracht und können nach dem Einbau der Schicht von einem Messgerät zur Schichtdickenbestimmung erfasst werden. Eine solche Lehre offenbart DE 102 34 217 A1. Damit lässt sich die Schichtstärke der auf der Reflektorfolie aufgetragenen Schicht mittels des Messgeräts nach dem Einbau messen. Diese Art der Schichtdickenbestimmung steht allerdings nicht in Echtzeit zur Verfügung. Außerdem können die vorab aufgebrachten Reflektorfolien den Schichtenverbund schwächen. Bestrebungen, das Verfahren zu automatisieren, sind bekannt, konnten sich allerdings bedingt durch den umständlichen Aufbau nicht in der Praxis durchsetzen. Dies mag auch daran liegen, dass die Schichtstärkenmessung, wie bei der vorangehend beschriebenen Praxis durch Handmessung, nur punktuell erfolgen kann.

Es sind auch bekannte Lösungen zur Schichtdickenermittlung im Einsatz, bei denen es sich um sogenannte "Hang-on-Systeme" handelt, d.h. speziell für den Anbau am Straßenfertiger konzipierte Anbaumodule, die ohne in das Maschinensystem des Straßenfertigers integriert zu sein, zur Schichtdickenbestimmung auf spezielle Art und Weise separat am Straßenfertiger angebaut werden müssen und selbstständig die Schichtdicke bestimmen. Nachteilig an solchen "Hang-on-Systemen" ist, dass durch deren Anwendung der Aufbau des Straßenfertigers komplizierter wird, weil insbesondere sensorische Hardwarekomponenten am Straßenfertiger hinzukommen. Außerdem verlangt der gesonderte Transport und Anbau von derartigen Zusatzmodulen sowie deren eigenständige Arbeitsweise zusätzliche Transport-, Lager- und Anbaumittel sowie dafür geschultes Bedienpersonal, wodurch der Baustelleneinsatz komplizierter wird und der Herstellungsaufwand zunimmt. Problematisch bei solchen "Hang-on-Systemen" ist auch, dass es bei Bodenunebenheiten des zu überbauenden Planums und bei Änderungen des Anstellwinkels der Einbaubohle Prinzip bedingt Differenzen zwischen der realen und der erfassten Schichtstärke geben kann.

EP 2 921 588 A1 offenbart einen Straßenfertiger mit einer Schichtdickenerfassungsvorrichtung sowie ein Verfahren zum Erfassen der Dicke einer eingebauten Materialschicht. Zum Berechnen der Schichtdicke umfasst die Schichtdickenerfassungsvorrichtung einen ersten Sensor zum Erfassen eines ersten Abstands zu der eingebauten Materialschicht und einen zweiten Sensor zum Erfassen eines zweiten Abstands zu dem Untergrund, auf welchem sich der Straßenfertiger bewegt. Des Weiteren werden für eine Nivellierung der Einbaubohle des Straßenfertigers Ultraschallsensoren offenbart.

EP 2 535 456 A1, EP 2 535 457 A1 und EP 2 535 458 A1 offenbaren jeweils Straßenfertiger mit daran vorgesehenen Schichtdickenerfassungssystemen zum Ermitteln der Schichtdicke der hergestellten Einbauschicht.

Vor dem Hintergrund des oben dargestellten Stands der Technik liegt der Erfindung die Aufgabe zugrunde, einen Straßenfertiger mit einem Schichtdickenerfassungssystem auszustatten, das in konstruktiver sowie technischer Hinsicht einwandfrei, insbesondere ohne großen Transport- und Aufbauaufwand, zum Einsatz kommen kann und des Weiteren ohne großen Herstellungsaufwand am Straßenfertiger umsetzbar ist. Des Weiteren ist es die Aufgabe der
Erfindung, ein Verfahren zur Verfügung zu stellen, womit sich an einem Straßenfertiger die Schichtdicke einer hergestellten Einbauschicht erfassen lässt.

Die Aufgabe der Erfindung wird gelöst durch einen Straßenfertiger gemäß dem Anspruch 1 sowie mittels eines Verfahrens zum Betreiben eines Straßenfertigers gemäß dem unabhängigen Verfahrensanspruch 15.

Vorteilhafte Weiterbildungen der Erfindung sind in den Unteransprüchen angegeben.

Die Erfindung bezieht sich auf einen Straßenfertiger zum Herstellen einer Einbauschicht auf einem Untergrund, auf dem sich der Straßenfertiger während einer Einbaufahrt entlang einer Einbaurichtung fortbewegt. Der erfindungsgemäße Straßenfertiger weist eine höhenverstellbare Einbaubohle zum Herstellen der Einbauschicht und ein Nivelliersystem auf, das dazu konfiguriert ist, eine Höhenlage der Einbaubohle zu steuern, um insbesondere Unebenheiten des Untergrunds auszugleichen. Das Nivelliersystem umfasst eine erste Messvorrichtung, die mindestens eine erste Sensoreinheit aufweist, die dazu konfiguriert ist, während der Einbaufahrt berührungslos mindestens einen ersten Abstand zu einer Oberfläche des Untergrunds zu messen. Ferner umfasst die erste Messvorrichtung mindestens eine zweite Sensoreinheit, die dazu konfiguriert ist, während der Einbaufahrt berührungslos mindestens einen zweiten Abstand zu einer Oberfläche der auf dem Untergrund hergestellten Einbauschicht zu messen.

Der erfindungsgemäße Straßenfertiger ist weiter dazu ausgebildet, basierend auf dem ersten und dem zweiten gemessenen Abstand ein Referenzniveau zu bestimmen, worauf basierend ein Nivellieristwert dem Nivelliersystem zur Ansteuerung der Höhenlage der Einbaubohle vorhaltbar ist. Der Nivellieristwert bildet insbesondere eine Steuergröße, die basierend auf einer abgetasteten Differenz im Vergleich zu einem sollwertigen, insbesondere gemittelten, Referenzniveau gebildet wird und zum automatisierten Verstellen der Höhenlage der Einbaubohle einsetzbar ist, womit im Einbaubetrieb sowohl langgestreckte als auch auf kurzer Distanz vorliegende abgetastete Unebenheiten im Untergrund ausgeglichen werden können.

Erfindungsgemäß ist der Straßenfertiger dazu konfiguriert, des Weiteren basierend auf dem mittels der ersten Sensoreinheit gemessenen ersten Abstand sowie auf dem mittels der zweiten Sensoreinheit gemessenen zweiten Abstand eine Schichtdicke der auf dem Untergrund hergestellten Einbauschicht zu bestimmen. Dies bedeutet, dass am erfindungsgemäßen Straßenfertiger die Schichtdickenmessfunktion im am Straßenfertiger arbeitenden Nivelliersystem integriert ist. Das Nivelliersystem liefert damit außer seiner eigentlichen Nivellierfunktion zusätzlich, sozusagen als funktional daran integral ausgebildeten Bestandteil, eine Funktion zur Schichtdickenbestimmung.

Hier wird beim erfindungsgemäßen Straßenfertiger die daran für das Nivelliersystem vorgesehene Sensorik zumindest teilweise auch für die Ermittlung der Schichtdicke der mittels des Straßenfertigers hergestellten Einbauschicht eingesetzt. In anderen Worten bewerkstelligt der erfindungsgemäße Straßenfertiger mittels derselben Sensoreinheiten das Bilden des Referenzniveaus für das Nivelliersystem und das Messen der Schichtdicke. Damit ist gemeint, dass am Straßenfertiger Sensoreinheit des Nivelliersystems auch für die Schichtdickenmessung verwendet werden. Diese gemeinsam eingesetzten Sensoreinheiten sind sowohl in funktionaler Arbeitsweise als auch hinsichtlich deren Anbauorts am Straßenfertiger identisch.

Weil während des Einbaubetriebs die mittels der beiden Sensoreinheiten erfassten Abstandsmessungen zu deren jeweiligem Untergrund sowohl für die Nivellierfunktion als auch für die Schichtdickenerfassungsfunktion gleichermaßen eingesetzt werden, vereinfacht sich einerseits der messtechnische Aufbau am Straßenfertiger und andererseits lassen sich die Herstellungskosten des Straßenfertigers reduzieren. Außerdem kann das mit den Abstandsmessungen einhergehende Datenvolumen, das als gemeinsame Datenbasis für die Nivellier- und Schichtdickenmessfunktion eingesetzt wird, reduziert werden, wodurch sich insgesamt der in Summe für die jeweiligen Funktionen eingesetzte Rechenaufwand minimiert.

Hinzu kommt, dass im Baustelleneinsatz das für die Anwendung der Sensorik des Nivelliersystems geschulte Bedienpersonal im Wesentlichen ohne zusätzlichen Schulungsaufwand die Schichtdickenmessfunktion beherrscht. Dies liegt insbesondere daran, weil die jeweiligen Sensoreinheiten für das Nivelliersystem und für die Schichtdickenbestimmung hinsichtlich deren Funktionsweise sowie angesichts deren Aufbaus, Montage und Montageorts identisch sind.

Der erfindungsgemäße Straßenfertiger bildet daher ein integrales Nivellier-und Schichtdickenmesssystem aus. Im Gegensatz zum Stand der Technik werden gemäß der Erfindung für das Nivelliersystem und die Schichtdickenmessfunktion nicht mehr am Straßenfertiger gesonderte, für den jeweiligen Zweck bestimmte Sensoreinheiten eingesetzt, sondern für die jeweilige Nivellier- und Schichtdickenmessfunktion dieselben Sensoreinheiten verwendet.

Vorzugsweise ist die Schichtdickenbestimmung kontinuierlich während der Einbaufahrt durchführbar. Alternativ könnte die Schichtdickenerfassung intervallweise durchführbar sein. Vorzugsweise ist der Straßenfertiger dazu ausgebildet, die Schichtdicke allein mittels der an ihm für das Nivelliersystem eingesetzten Hardwarekomponenten zu bestimmen. Damit lassen sich logischerweise Zusatzanbauten zur Schichtdickenbestimmung am Straßenfertiger vermeiden. Die für die Nivellier- sowie für die Schichtdickenmessfunktion verwendete Messvorrichtung besitzt dabei einen komponentenreduzierten integralen Aufbau und bildet ein multifunktionales Modul am Straßenfertiger, das vorzugsweise lösbar am Straßenfertiger befestigt ist.

Eine Variante sieht vor, dass die mittels der Sensoreinheiten der Messvorrichtung gemessenen Abstände sowohl als Basis für eine Nivellierautomatik der Einbaubohle als auch für eine Schichtdickenmessfunktion einsetzbar sind. Damit ist gemeint, dass die erfassten Abstandsmessungen gleichermaßen, zeitlich in vorzugsweise parallel ablaufenden Schritten als Berechnungsgrundlage für die Nivellierautomatik und die Schichtdickenbestimmung herangezogen werden. Aufgrund der gemeinsamen Messwertebasis lassen sich sowohl die Nivellierautomatik als auch die Schichtdickenmessung unter geringem konstruktiven und messtechnischem Aufwand durchführen.

Vorteilhaft ist es, wenn am Straßenfertiger die Nivellierautomatik separat von oder gemeinsam mit der Schichtdickenmessfunktion aufrufbar ist. Dies ermöglicht einen erweiterten Betrieb des Straßenfertigers. Damit könnte die Schichtdickenmessung gesondert aufgerufen werden, während die Nivellierung der Einbaubohle manuell von einem Bediener, beispielsweise an einem Außenbedienstand des Straßenfertigers, auf Basis des abgetasteten, gegebenenfalls am Außenbedienstand angezeigten, Referenzniveaus gesteuert wird.

Vorzugsweise sieht der Straßenfertiger für das Nivelliersystem und die Bestimmung der Schichtdicke eine gemeinsame, integral am Straßenfertiger verbaute Steuereinrichtung vor. Die Steuereinrichtung bildet hier eine zentrale Berechnungseinheit für das Nivelliersystem und die daran integral vorgesehene Schichtdickenmessfunktion aus. Damit lässt sich die am Straßenfertiger verbaute Elektronik weiter reduzieren. Optional kann die Steuereinrichtung auch jeweilige Berechnungskomponenten aufweisen, anhand derer eine Nivellierfunktion und/oder Schichtdickenmessfunktion am Straßenfertiger an beiden Seiten der Einbaubohle unabhängig voneinander durchführbar ist.

Gemäß einer vorteilhaften Variante der Erfindung ist die Steuereinrichtung dazu konfiguriert, basierend auf dem Nivellieristwert eine Stellung von an der Einbaubohle, an vorderen Zugpunkten befestigten Nivellierzylindern zum Variieren der Schichtdicke anzupassen. Je nach Ebenheit des vorliegenden Untergrunds kann damit ein Ausgleich von Unebenheiten über die Nivellierzylinder erreicht werden, damit die Einbaubohle im schwimmenden Betrieb nicht Unebenheiten des Untergrunds nachbaut, sondern eine ebene Einbauschicht verlegt.

Vorzugsweise weist die erste Messvorrichtung ein sich längs der Einbaurichtung erstreckendes Tragwerk für die erste und die zweite Sensoreinheit auf, an dem in der Einbaurichtung die erste Sensoreinheit vor der Einbaubohle und die zweite Sensoreinheit hinter der Einbaubohle positioniert sind. Das Tragwerk kann aus einem Zusammenbau mehrerer sich in Einbaurichtung erstreckender Balken bestehen, woran die jeweiligen Sensoreinheiten montiert sind. Das Tragwerk kann in vertikaler Projektionsebene betrachtet geradlinig oder gestuft ausgebildet sein.

Vorzugsweise weist die erste Messvorrichtung ferner eine dritte und eine vierte Sensoreinheit zum Messen jeweiliger Abstände zu der Oberfläche des Untergrunds auf, wobei die dritte und die vierte Sensoreinheit in der Einbaurichtung vor der Einbaubohle am Tragwerk positioniert sind.

Zweckgemäß ist es, wenn die erste, zweite, dritte und vierte Sensoreinheit am Tragwerk der ersten Messvorrichtung in der Einbaurichtung um ein Vielfaches eines vorbestimmten Abstands zueinander positioniert sind. Im Einsatz könnten die jeweiligen vor der Einbaubohle positionierten Sensoreinheiten zueinander gleich weit beabstandet sein. Die hinter der Einbaubohle positionierte Sensoreinheit könnte um das Doppelte Maß des Abstands, der zwischen den vorangestellt positionierten Sensoreinheiten vorliegt, von der ihr in Einbaurichtung unmittelbar vorangestellt positionierten Sensoreinheit vor der Einbaubohle beabstandet sein. Für die Einstellung der Abstände zwischen den Sensoreinheiten könnten Markierungen als Montagehilfe am Tragwerk vorgesehen sein.

Eine bevorzugte Variante sieht vor, dass der Straßenfertiger für die Schichtdickenbestimmung mindestens eine Wegmesseinrichtung aufweist, die eine satellitengestützte und eine mechanische Wegmesseinheit besitzt oder mindestens eine optische Wegmesseinheit umfasst. Beispielsweise besteht die vorgenannt kombinierte Wegmesseinrichtung aus einer GPS-basierten und einer Hodometermesseinheit des Fahrantriebs des Straßenfertigers, sodass mittels der funktionalen Verknüpfung dieser Sensormesssysteme hohe Messgenauigkeiten erreichbar sind. Vorstellbar ist es, dass die satellitengestützte Wegmesseinheit ein GPS-System aufweist, insbesondere eine GNSS-, DGPS-, DGNSS- und/oder RTK-Einheit vorsieht.

Die Wegmesseinrichtung kann dafür eingesetzt werden, um an der gleichen Stelle, d.h. an einer vorbestimmten geographischen Einbauposition, Abstandsmessungen auf den Untergrund und auf die Oberfläche der an dieser Stelle verbauten Einbauschicht durchzuführen, um, beispielsweise mittels Differenzbildung, aus diesen Abstandsmessungen genau die Schichtdicke zu bestimmen. Hier kann also für die Schichtdickenbestimmung ein Satz von Abstandsmessungen miteinander verrechnet werden, wobei die miteinander verrechneten Abstandsmessungen an einer vorbestimmten Stelle der Einbauschicht, hinsichtlich des Abstands der Sensoreinheiten zueinander zeitverzögert aufgenommen werden. Die miteinander verrechneten Abstandsmessungen bestehen somit aus einer Abstandsmessung zum Untergrund mittels mindestens einer der vor der Einbaubohle positionierten Sensoreinheiten sowie aus einer zeitverzögert, genau an derselben geographischen Stelle durchgeführten Abstandsmessung zur Oberfläche der hergestellten Einbauschicht mittels der hinter der Einbaubohle positionierten Sensoreinheit, wenn diese während der Einbaufahrt die Stelle, an der die Schichtdicke gemessen werden soll, erreicht.

In anderen Worten können die hinter der Einbaubohle gemessenen Abstände zur Oberfläche der hergestellten Einbauschicht mit Abstandsmessungen, die an der gleichen Stelle mittels mindestens einer der vor der Einbaubohle positionierten Sensoreinheiten zuvor (d.h. bevor sich der Straßenfertiger um die Entfernung zwischen den benachbarten Sensoreinheiten weiterbewegt hat) erfasst wurden, zur Schichtdicke verrechnet werden. Die Verknüpfung jeweiliger Abstandsmessungen, die am selben Ort während der Einbaufahrt vor und hinter der Einbaubohle erfasst werden, wird mittels der Wegmesseinrichtung erreicht.

Zusätzlich zur Wegmesseinrichtung kann am Straßenfertiger, insbesondere an dessen Fahrantrieb, ein Geschwindigkeitssensor eingesetzt werden, um die zeitliche Verzögerung zu bestimmen, zu der die Abstandsmessungen an dem gleichen geographischen Punkt durchgeführt werden.

Basierend auf der erfassten Schichtdicke sowie der mittels der Wegmesseinrichtung erfassbaren Einbaustrecke ließen sich insbesondere in Verbindung mit anderen am Straßenfertiger vorliegenden Betriebseinstellungen, beispielsweise einer eingestellten Einbaubreite, auch andere einbaubezogene Größen bestimmen. Vorstellbar wäre es, dass die Wegmessung zusammen mit der Schichtdickenbestimmung und einer Bohlenbreitenmessung zur Bestimmung des eingebauten Materialvolumens eingesetzt werden. Des Weiteren ließe sich beispielsweise die aktuell oder kumuliert verbaute Masse des Einbauguts anhand einer vorbestimmten Asphaltdichte bestimmen. Weiterhin könnten insbesondere basierend auf der erfassten Schichtdicke sowie der erfassten Wegmessdaten Plausibilitätsprüfungen hinsichtlich einzuhaltender Auftragsvorgaben durchgeführt werden.

Eine Variante der Erfindung sieht vor, dass die Sensoreinheiten jeweils einen Ultraschallmultisensor aufweisen, der eine Vielzahl von nebeneinander, insbesondere in einer Linie, angeordneten Sensorzellen umfasst, die jeweils dazu ausgebildet sind, Abstandsmessungen zum Untergrund oder zur Einbauschicht durchzuführen. Die Sensoreinheiten liegen hiernach als Weitbereichssensoren vor. Damit lassen sich mittels der jeweiligen Sensoreinheiten vorbestimmte, gewünschte Messbereiche, beispielsweise innerhalb einer Messweite von ungefähr 30cm, erfassen, sodass die jeweiligen Abstandsmessungen der Sensoreinheiten zuverlässiger für das Nivelliersystem und die Schichtdickenmessfunktion vorliegen.

Vorzugsweise verfügt der Straßenfertiger für die Nivellierautomatik und/oder für die Bestimmung der Schichtdicke eine Filterfunktion, damit die Höhenverstellung der Einbaubohle optimal durchführbar ist und/oder bei der Schichtdickenbestimmung offensichtliche Messfehler kompensierbar sind. Dafür kann vorgesehen sein, dass der Straßenfertiger dazu ausgebildet ist, die von den Sensoreinheiten mittels der jeweiligen daran ausgebildeten Sensorzellen erfassten Abstandsmessungen, die hinsichtlich eines für die jeweiligen Sensoreinheiten variabel einstellbaren Soll-Abstandmesswert toleranzwertig sind, bei der Nivellierung der Einbaubohle und/oder bei der Bestimmung der Schichtdicke zu berücksichtigen. Andere, von einem vorbestimmten Toleranzbereich abweichende Abstandsmessungen können bei der Nivellierung und/oder bei der Bestimmung der Schichtdicke außeracht bleiben. Damit ist es möglich, diejenigen Messwerte, die größere Abweichungen zum Toleranzbereich darstellen, zu ignorieren, d.h. nicht bei der Nivellierung der Einbaubohle und/oder bei der Bestimmung der Schichtdicke einzubeziehen. Damit lassen sich vor allem mittels der jeweiligen Sensoreinheiten erfasste kurze Unebenheiten des Untergrunds, aber z.B. auch auf dem Untergrund herumliegendes, mittels der Sensoreinheiten erfasstes Werkzeug, bei der Abtastung des Referenzniveaus herausfiltern.

Eine Ausführungsform der Erfindung sieht vor, dass im Nivelliersystem zur Ansteuerung der Höhenlage der Einbaubohle als weiterer Nivellieristwert die aktuell bestimmte oder eine über einen Zeitraum daraus gemittelte Schichtdicke vorhaltbar ist. Damit kann bei der Ansteuerung und/oder Regelung der Ebenflächigkeit der Einbauschicht die aktuelle oder gemittelte Schichtstärke mit einbezogen werden, wodurch sich insbesondere außer dem ebenen Einbau auch der Einbau im Bereich der optimalen Schichtstärke automatisiert durchführen lässt. Vorzugsweise umfasst das Nivelliersystem eine zweite Messvorrichtung, wobei die erste Messvorrichtung in der Einbaurichtung an einer Seite des Straßenfertigers und die zweite Messvorrichtung in der Einbaurichtung an einer gegenüberliegenden Seite des Straßenfertigers angeordnet sind. Die beiden Messvorrichtungen können bau- und funktionsgleich ausgebildet sein. Dies ermöglicht eine in Einbaurichtung beidseitig am Straßenfertiger vorgesehene Nivellier- und Schichtdickenbestimmungsfunktion.

Insbesondere kann die Nivellierung der Einbaubohle mittels der Nivellierzylinder des Straßenfertigers, d.h. links und rechts am Straßenfertiger, separat durchgeführt werden. Die erste, links am Straßenfertiger angeordnete Messvorrichtung kann zur Ansteuerung des links am Straßenfertiger befestigten Nivellierzylinders und die zweite, rechts am Straßenfertiger angeordnete Messvorrichtung kann zur Ansteuerung des rechts am Straßenfertiger befestigten Nivellierzylinders eingesetzt werden.

Vorzugsweise ist das Nivelliersystem mit einer Speichereinheit funktional verbunden, auf der für Dokumentationszwecke die während der Einbaufahrt erfassten Schichtdickenmesswerte speicherbar sind. Eine Variante sieht vor, dass die erfasste Schichtdicke an einem Außenbedienstand des Straßenfertigers mittels einer daran befestigten Anzeigeeinheit visuell anzeigbar ist. Die Schichtdicke kann daran während des Betriebs des Straßenfertigers, d.h. während der Einbaufahrt, vom Bediener überwacht werden, der im Falle einer Differenz der erfassten Schichtdicke zur vorbestimmten Schichtdicke die Höhenlage der Einbaubohle verstellen kann. Durch Aufruf der Nivellierautomatik wird über die Nivellierzylinder die Höhenlage der Einbaubohle automatisch geregelt.

Vorzugsweise umfasst der Straßenfertiger eine Übertragungseinheit, mittels welcher die erfassten Schichtdickenwerte an eine externe Einrichtung, beispielsweise an eine Einbaumaterialversorgungsstation, übermittelbar sind.

Die Erfindung bezieht sich auch auf ein Verfahren zum Betreiben eines Straßenfertigers. Beim erfindungsgemäßen Verfahren werden sowohl für eine am Straßenfertiger aufrufbare Nivelliersystemfunktion zum Ausgleichen von Untergrundunebenheiten als auch für eine ferner am Straßenfertiger aufrufbare Schichtdickenmessfunktion zum Bestimmen einer Schichtdicke einer mittels des Straßenfertigers hergestellten Einbauschicht örtlich dieselben, am Straßenfertiger angebauten Sensoreinheiten eingesetzt. Das am Straßenfertiger eingesetzte Nivelliersystem greift somit auf dieselben Sensoreinheiten zurück wie die Schichtdickenmessfunktion. Dadurch kann die am Straßenfertiger angebaute Elektronik reduziert werden. Für die Schichtdickenmessung bedarf es keinerlei zusätzlichen Transport- und Aufbaumaßnahmen am Straßenfertiger.

Das erfindungsgemäße Verfahren verwendet für das am Straßenfertiger vorgesehene Nivelliersystem wie auch für die mittels des Straßenfertigers bestimmte Schichtdicke gemeinsame Sensoreinheiten, wodurch der Straßenfertiger auf der Baustelle wegen der reduzierten Anzahl daran zu montierender Komponenten, schneller in Betrieb genommen werden kann.

Ausführungsbeispiele der Erfindung werden anhand der folgenden Figuren genauer erläutert. Es zeigen:
- Figur 1: einen Straßenfertiger zum Herstellen einer Einbauschicht auf einem Untergrund,
- Figur 2: einen Straßenfertiger mit einer seitlich angeordneten, langgestreckten Messvorrichtung zum Herstellen eines virtuellen Referenzniveaus für eine Nivellierautomatik,
- Figur 3: eine schematische Darstellung einer Messvorrichtung gemäß Figur 2 mit vier Sensoreinheiten,
- Figur 4: eine schematische Darstellung eines Messprinzips der in Figur 3 in Einbaurichtung vor der Einbaubohle auf den Untergrund gerichteten Sensoreinheiten, und
- Figur 5: eine schematische Darstellung des am Straßenfertiger eingesetzten Nivelliersystems mit integrierter Schichtdickenmessfunktion.

Technische Merkmale sind in den Figuren durchgehend mit gleichen Bezugszeichen versehen.

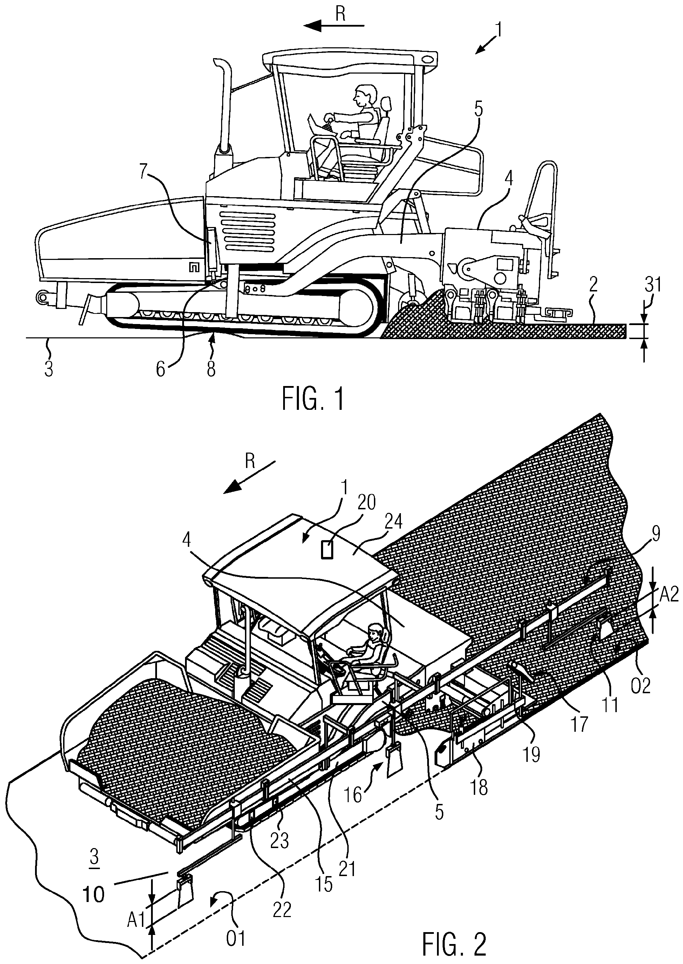

Figur 1 zeigt einen Straßenfertiger 1, der eine Einbauschicht 2 auf einem Untergrund 3 herstellt, auf dem sich der Straßenfertiger 1 während einer Einbaufahrt entlang einer Einbaurichtung R fortbewegt. Der Straßenfertiger 1 besitzt eine höhenverstellbare Einbaubohle 4 zum (Vor-)verdichten der Einbauschicht 2. Die Einbaubohle 4 ist an einem Bohlenholm 5 befestigt, der an einem vorderen Zugpunkt 6 mit einem Nivellierzylinder 7 des Straßenfertigers 1 verbunden ist. Der Bohlenholm 5 dient als Hebel, um ein Variieren einer Nivellierzylinderstellung in eine Veränderung eines Anstellwinkels der Einbaubohle 4 umzuwandeln, insbesondere um Unebenheiten 8 im Untergrund 3 auszugleichen.

Figur 2 zeigt den Straßenfertiger 1 während der Einbaufahrt. In Figur 2 ist die Einbaubohle 4 als Ausziehbohle konfiguriert. Am Bohlenholm 5 ist eine erste Messvorrichtung 9 angeordnet. Die Messvorrichtung 9 umfasst eine erste Sensoreinheit 10, die dazu konfiguriert ist, während der Einbaufahrt berührungslos, beispielsweise mittels Ultraschall, einen ersten Abstand A1 zu einer Oberfläche O1 des Untergrunds 3 zu messen. Ferner besitzt die Messvorrichtung 9 eine zweite Sensoreinheit 11, die dazu konfiguriert ist, während der Einbaufahrt berührungslos, beispielsweise mittels Ultraschall, einen zweiten Abstand A2 zu einer Oberfläche O2 der auf dem Untergrund 3 hergestellten Einbauschicht 2 zu messen.

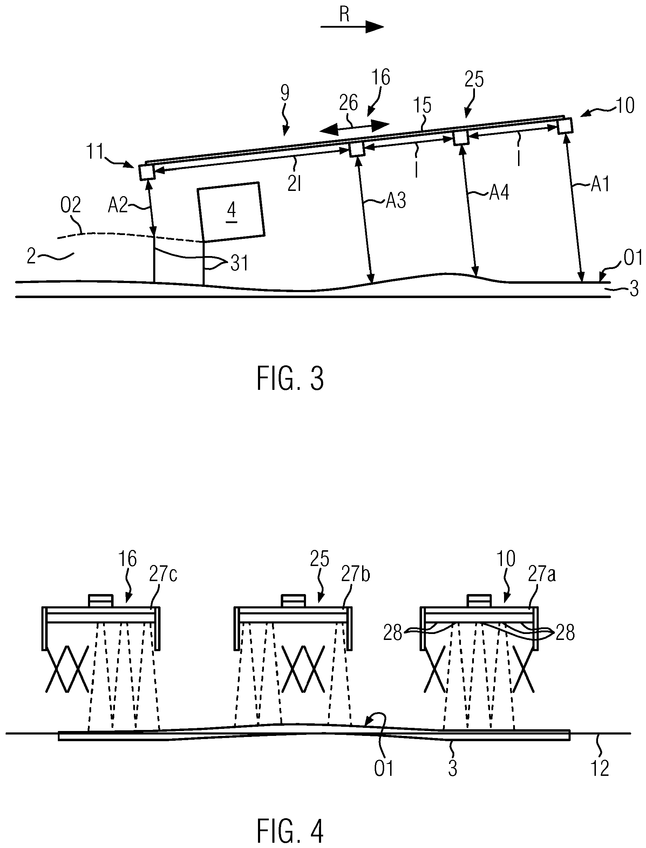

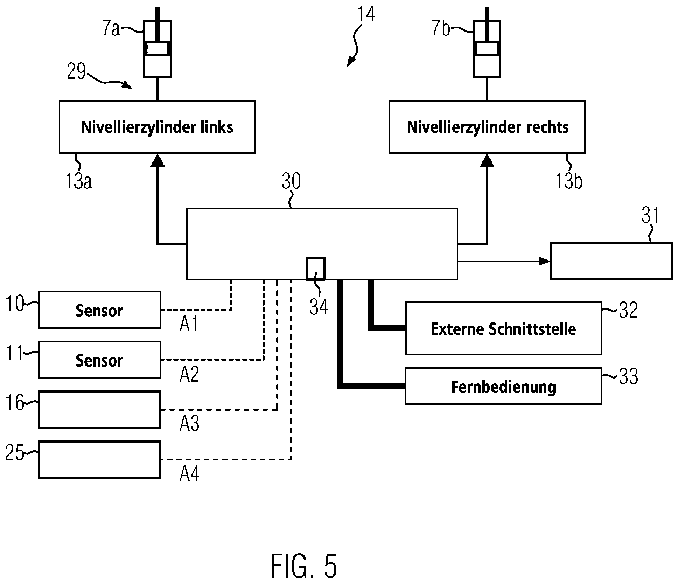

Mittels der ersten Sensoreinheit 10 und der zweiten Sensoreinheit 11 wird in Figur 2 die relative Höhenlage des Untergrunds 3 und der eingebauten Einbauschicht 2 abgetastet, um aus diesen Messergebnissen ein Referenzniveau 12 (siehe Figur 4) zu bestimmen. Darauf basierend wird als Steuergröße ein Nivellieristwert 13a, 13b generiert, der im Nivelliersystem 14 zur Ansteuerung der Höhenlage der Einbaubohle 4 einsetzbar ist (siehe Figur 5).

Gemäß Figur 2 umfasst die Messvorrichtung 9 ein Tragwerk 15, das sich in Einbaurichtung R seitlich des Straßenfertigers 1 über mehrere Meter erstreckt. Am Tragwerk 15 ist die erste Sensoreinheit 10 in Einbaurichtung R vor der Einbaubohle 4 angeordnet. Die zweite Sensoreinheit 11 ist am Tragwerk 15 in Einbaurichtung R hinter der Einbaubohle 4 befestigt. Ferner zeigt Figur 2, dass am Tragwerk 15 eine weitere, dritte Sensoreinheit 16 in Einbaurichtung R in kurzem Abstand vor der Einbaubohle 4 angeordnet ist.

Figur 2 zeigt ferner einen Außenbedienstand 17, der an der Einbaubohle 4 an einem daran ausgebildeten Seitenschieber 18 befestigt ist. Am Außenbedienstand 17 können an einer daran vorgesehen Eingabe-/Anzeigeeinheit 19 Abstandsmessungen der jeweiligen Sensoreinheiten 10, 11, 16 (einschließlich der in Figur 3 gezeigten vierten Sensoreinheit 25) überwacht und kontrolliert werden. Für den Fall, dass das basierend auf den Höhenmessungen hergestellte Referenzniveau 12 nicht einem sollwertigen Referenzniveau entspricht, ist dies an der Eingabe-/Anzeigeeinheit 19 anzeigbar. Ein Bediener kann dann mittels der Eingabeeinheit 19 manuell eine Höhenlage der Einbaubohle 4 links und/oder rechts am Straßenfertiger ändern, um beispielsweise erfasste Unebenheiten 8 im Untergrund auszugleichen. Ergänzend oder alternativ kann zur Höhensteuerung der Einbaubohle 4 eine Nivellierautomatik eingesetzt werden.

Figur 2 zeigt ferner, dass der Straßenfertiger 1 eine satellitengestützte Wegmesseinheit 20 (z.B. eine GNSS, DGPS, DGNSS und/oder RTK-Einheit) auf einem Dachaufbau 24 aufweist.

Die satellitengestützte Wegmesseinheit 20 kann Teil eines satellitengestützten Navigationssystems des Straßenfertigers 1 sein und ist dazu ausgebildet, eine GPS-Messung zur Positionsbestimmung des Straßenfertigers 1 durchzuführen. Ferner besitzt der Straßenfertiger 1 aus Figur 2 eine am Fahrantrieb 21 des Straßenfertigers 1 angeordnete mechanische Wegmesseinheit 22. Die mechanische Wegmesseinheit 22 ist beispielsweise als Hodometereinrichtung konfiguriert, um eine zurückgelegte Einbaustrecke des Straßenfertigers 1 während der Einbaufahrt zu bestimmen. Am Straßenfertiger 1 der Figur 2 sind die satellitengestützte Wegmesseinheit 20 und die mechanische Wegmesseinheit 22 funktional miteinander verknüpft, um als integrale Wegmesseinrichtung eine hochgenaue Messung der zurückgelegten Einbaustrecke, insbesondere für den Zweck der Schichtdickenbestimmung, während der Einbaufahrt zu bestimmen.

Alternativ könnte die aus einer Kombination der satellitengestützten und der mechanischen Wegmesseinheiten 20, 22 gebildete Wegmesseinrichtung auch aus einer optischen Wegmesseinheit 23 bestehen, die insbesondere an einem Fahrwerk des Straßenfertigers 1 angeordnet ist.

Figur 3 zeigt eine schematische Darstellung der Messvorrichtung 9 mit insgesamt vier daran angeordneten Sensoreinheiten 10, 11, 16, 25. In Einbaurichtung R ist hinter der Einbaubohle 4 die zweite Sensoreinheit 11 am Tragwerk 15 der Messvorrichtung 9 angeordnet, um den zweiten Abstand A2 zur Oberfläche O2 der hergestellten Einbauschicht 2 zu messen. In Einbaurichtung R vor der Einbaubohle 4 sind in Summe drei Sensoreinheiten 10, 16, 25 positioniert, um jeweils eine Höhenmessung zum Untergrund 3 durchzuführen. Ganz vorne am Tragwerk 15 der Messvorrichtung 9 ist die erste Sensoreinheit 10 positioniert. In Einbaurichtung R dahinter sind die dritte Sensoreinheit 16 sowie eine weitere, vierte Sensoreinheit 25 am Tragwerk 15 der Messvorrichtung 9 angeordnet, um jeweils einen Abstand A3, A4 zur Oberfläche O1 des Untergrunds 3 zu messen. Die vorderste, erste Sensoreinheit 10 ist durch einen Abstand I von der in Einbaurichtung R dahinter positionierten, vierten Sensoreinheit 25 entfernt. Zwischen der vierten Sensoreinheit 25 und der weiter in Einbaurichtung R dahinter am Tragwerk 15 positionierten dritten Sensoreinheit 16 liegt ebenfalls der Abstand I vor.

Ferner zeigt Figur 3, dass die am Ende des Tragwerks 15 positionierte, zweite Sensoreinheit 11 durch den zweifachen Abstand I von der in Einbaurichtung R vorderhalb positionierten dritten Sensoreinheit 16 entfernt positioniert ist. Die Beabstandung der jeweiligen Sensoreinheiten 10, 11, 16, 25 am Tragwerk 15 der Messvorrichtung 9 ist variabel einstellbar, was mittels eines Pfeils 26 im Bereich der dritten Sensoreinheit 16 schematisch dargestellt ist.

In Figur 4 wird ein Messprinzip der an der Messvorrichtung 9 eingesetzten Sensoreinheiten 10, 16, 25 schematisch dargestellt. Figur 4 zeigt dafür exemplarisch die am Tragwerk 15 der Messvorrichtung 9 in Einbaurichtung R vor der Einbaubohle 4 positionierten Sensoreinheiten 10, 16, 25.

Die erste, dritte und vierte Sensoreinheit 10, 16, 25 (sowie die in Figur 4 nicht gezeigte zweite Sensoreinheit 11 aus Figur 3) sind gemäß Figur 4 jeweils als Ultraschall-Multi-Sensor 27a, 27b, 27c ausgebildet. Die jeweiligen Ultraschall-Multi-Sensoren 27a, 27b, 27c weisen eine Vielzahl von nebeneinander angeordneten Sensorzellen 28 auf. In Figur 4 haben die jeweiligen Ultraschall-Multi-Sensoren 27a, 27b, 27c jeweils fünf in Reihe angeordnete Sensorzellen 28. Die mittels der Sensorzellen 28 erfassten jeweiligen Abstände zum Untergrund 3 können zum Bestimmen des in Figur 4 gezeigten virtuellen Referenzniveaus 12 eingesetzt werden.

In Figur 4 wird schematisch gezeigt, dass lediglich drei an den jeweiligen Ultraschall-Multi-Sensoren 27a, 27b, 27c erfasste Höhenmessungen zur Bildung des Referenzniveaus 12 verwendet werden. Die an den jeweiligen Sensoreinheiten 10, 16, 25 erfassten Messwerte, die die größten Abweichungen von einer hinterlegten oder berechneten Referenz darstellen, werden ignoriert und nicht in der Berechnung des Referenzniveaus mit einbezogen. Das Referenzniveau 12 kann beispielsweise durch Mittelwertbildung der mittels der jeweiligen Sensoreinheiten 10, 16, 25 erfassten und berücksichtigten Messwerte hergestellt werden.

Basierend auf dem erfassten Referenzniveau 12 kann das in Figur 5 gezeigte Nivelliersystem 14 eine Nivellierautomatik 29 an jeweiligen, links und rechts am Straßenfertiger 1 befestigten Nivellierzylindern 7a, 7b durchführen, um eine Höhenlage der Einbaubohle 4 automatisch, insbesondere zum Ausgleich von Unebenheiten 8 im Untergrund 3, zu steuern.

Das in Figur 5 gezeigte Nivelliersystem 14 ist integral am Straßenfertiger 1 verbaut. Das Nivelliersystem 14 umfasst eine zentrale Steuereinrichtung 30, der kontinuierlich Abstandsmessungen der jeweiligen Sensoreinheiten 10, 11, 16, 25 zugeleitet werden. Die Steuereinrichtung 30 ist dazu konfiguriert, das Referenzniveau 12 zu bestimmen, und darauf basierend für die jeweiligen Nivellierzylinder 7a, 7b Nivellieristwerte 13a, 13b zu deren Ansteuerung zu generieren, um eine Stellung der Nivellierzylinder 7a, 7b zu variieren. Des Weiteren ist die zentrale Steuereinrichtung 30 dazu konfiguriert, basierend auf den jeweiligen erfassten Abständen A1, A2, A3, A4 der Sensoreinheiten 10, 11, 16, 25 eine Schichtdicke 31 (siehe auch Figuren 1 und 3) zu bestimmen.

Figur 5 zeigt, dass die für das Nivelliersystem 14 zum Herstellen des Referenzniveaus 12 mittels der Sensoreinheiten 10, 11, 16, 25 erfassten Abstandsmessungen A1, A2, A3, A4 auch zur Bestimmung der Schichtdicke 31 der hergestellten Einbauschicht 2 angewendet werden.

Das Nivelliersystem 14 aus Figur 5 besitzt ferner eine Übertragungseinrichtung 32, mittels welcher die berechneten Schichtdickenwerte an eine externe Einrichtung (nicht gezeigt) übermittelbar sind.

Ferner zeigt Figur 5, dass das Nivelliersystem 14 mittels einer daran funktional angebundenen Bedienung 33 ansteuerbar ist. Die Bedienung 33 kann beispielsweise als integraler Bestandteil des Außenbedienstands 17, insbesondere der daran positionierten Eingabeeinheit 19, vorliegen. Schließlich zeigt Figur 5, dass das Nivelliersystem 14 eine Speichereinheit 34 aufweist, die gemäß Figur 5 beispielsweise als integraler Bestandteil der Steuereinrichtung 30 ausgebildet sein kann, um insbesondere erfasste Schichtdickenmesswerte für Dokumentationszwecke darauf abzuspeichern.

## Patentansprüche

1. Straßenfertiger (1) zum Herstellen einer Einbauschicht (2) auf einem Untergrund (3), auf dem sich der Straßenfertiger (1) während einer Einbaufahrt entlang einer Einbaurichtung (R) fortbewegt, wobei der Straßenfertiger (1) eine höhenverstellbare Einbaubohle (4) zum Herstellen der Einbauschicht (2) und ein Nivelliersystem (14) aufweist, das dazu konfiguriert ist, eine Höhenlage der Einbaubohle (4) zu steuern, um Unebenheiten (8) des Untergrunds (3) auszugleichen, wobei das Nivelliersystem (14) eine erste Messvorrichtung (9) umfasst, die mindestens eine erste Sensoreinheit (10), die dazu konfiguriert ist, während der Einbaufahrt berührungslos mindestens einen ersten Abstand (A1) zu einer Oberfläche (O1) des Untergrunds (3) zu messen, und mindestens eine zweite Sensoreinheit (11) umfasst, die dazu konfiguriert ist, während der Einbaufahrt berührungslos mindestens einen zweiten Abstand (A2) zu einer Oberfläche (O2) der auf dem Untergrund (3) hergestellten Einbauschicht (2) zu messen, wobei der Straßenfertiger (1) dazu ausgebildet ist, basierend auf dem ersten und dem zweiten gemessenen Abstand (A1, A2) ein Referenzniveau (12) zu bestimmen, worauf basierend ein Nivellieristwert (13a, 13b) dem Nivelliersystem (14) zur Ansteuerung der Höhenlage der Einbaubohle (4) vorhaltbar ist, **dadurch gekennzeichnet, dass** der Straßenfertiger (1) dazu konfiguriert ist, des Weiteren basierend auf dem mittels der ersten Sensoreinheit (10) gemessenen ersten Abstand (A1) sowie auf dem mittels der zweiten Sensoreinheit (11) gemessenen zweiten Abstand (A2) eine Schichtdicke (31) der auf dem Untergrund (3) hergestellten Einbauschicht (2) zu bestimmen.

2. Straßenfertiger nach Anspruch 1, **dadurch gekennzeichnet, dass** der Straßenfertiger (1) dazu ausgebildet ist, die Schichtdicke (31) allein mittels an ihm für das Nivelliersystem (14) eingesetzter Hardwarekomponenten zu bestimmen.

3. Straßenfertiger nach einem der vorangehenden Ansprüche, **dadurch gekennzeichnet, dass** die mittels der Sensoreinheiten (10, 11) der Messvorrichtung (9) gemessenen Abstände (A1, A2) sowohl als Basis für eine Nivellierautomatik (29) der Einbaubohle (4) als auch für eine Schichtdickenmessfunktion einsetzbar sind.

4. Straßenfertiger nach Anspruch 3, **dadurch gekennzeichnet, dass** am Straßenfertiger (1) die Nivellierautomatik (29) separat von oder gemeinsam mit der Schichtdickenmessfunktion aufrufbar ist.

5. Straßenfertiger nach einem der vorangehenden Ansprüche, **dadurch gekennzeichnet, dass** der Straßenfertiger (1) für das Nivelliersystem (14) und die Bestimmung der Schichtdicke (31) eine gemeinsame, integral am Straßenfertiger (1) verbaute Steuereinrichtung (30) vorsieht.

6. Straßenfertiger nach Anspruch 5, **dadurch gekennzeichnet, dass** die Steuereinrichtung (30) dazu konfiguriert ist, basierend auf dem Nivellieristwert (13a, 13b) eine Stellung von an der Einbaubohle (4), an vorderen Zugpunkten (6) befestigten Nivellierzylindern (7) zum Variieren der Schichtdicke (31) anzupassen.

7. Straßenfertiger nach einem der vorangehenden Ansprüche, **dadurch gekennzeichnet, dass** die Messvorrichtung (9) ein sich längs der Einbaurichtung (R) erstreckendes Tragwerk (15) für die erste und die zweite Sensoreinheit (10, 11) aufweist, an dem in der Einbaurichtung (R) die erste Sensoreinheit (10) vor der Einbaubohle (4) und die zweite Sensoreinheit (11) hinter der Einbaubohle (4) positioniert sind.

8. Straßenfertiger nach einem der vorangehenden Ansprüche, **dadurch gekennzeichnet, dass** die Messvorrichtung (9) eine dritte (16) und eine vierte Sensoreinheit (25) zum Messen jeweiliger Abstände (A3, A4) zu der Oberfläche (O1) des Untergrunds (3) aufweist, wobei die dritte und die vierte Sensoreinheit (16, 25) in der Einbaurichtung (R) vor der Einbaubohle (4) am Tragwerk (15) positioniert sind, und wobei die erste, zweite, dritte und vierte Sensoreinheit (10, 11, 16, 25) am Tragwerk (15) der Messvorrichtung (9) in der Einbaurichtung (R) um ein Vielfaches eines vorbestimmten Abstands (I) zueinander positioniert sind.

9. Straßenfertiger nach einem der vorangehenden Ansprüche, **dadurch gekennzeichnet, dass** der Straßenfertiger (1) mindestens eine Wegmesseinrichtung aufweist, die eine satellitengestützte (20) und eine mechanische Wegmesseinheit (22) besitzt oder mindestens eine optische Wegmesseinheit (23) vorsieht.

10. Straßenfertiger nach einem der vorangehenden Ansprüche, **dadurch gekennzeichnet, dass** die Sensoreinheiten (10, 11, 16, 25) jeweils einen Ultraschall-Multi-Sensor (27) aufweisen, der eine Vielzahl von nebeneinander angeordneten Sensorzellen (28) aufweist, die jeweils dazu ausgebildet sind, Abstandsmessungen durchzuführen.

11. Straßenfertiger nach Anspruch 10, **dadurch gekennzeichnet, dass** der Straßenfertiger (1) dazu ausgebildet ist, die von den Sensoreinheiten (10, 11, 16, 25) mittels der jeweiligen daran ausgebildeten Sensorzellen (28) erfassten Abstandsmessungen, die hinsichtlich eines für die jeweiligen Sensoreinheiten (10, 11, 16, 25) variabel einstellbaren Sollabstandmesswerts toleranzwertig sind, bei der Nivellierung der Einbaubohle (4) und/oder bei der Bestimmung der Schichtdicke (31) zu berücksichtigen.

12. Straßenfertiger nach einem der vorangehenden Ansprüche, **dadurch gekennzeichnet, dass** dem Nivelliersystem (14) zur Ansteuerung der Höhenlage der Einbaubohle (4) als weiterer Nivellieristwert die aktuell bestimmte oder eine über einen Zeitraum daraus gemittelte Schichtdicke (31) vorhaltbar ist.

13. Straßenfertiger nach einem der vorangehenden Ansprüche, **dadurch gekennzeichnet, dass** das Nivelliersystem (14) eine zweite Messvorrichtung vorsieht, wobei die erste Messvorrichtung (9) in der Einbaurichtung (R) an einer Seite des Straßenfertigers (1) und die zweite Messvorrichtung in der Einbaurichtung (R) an einer gegenüberliegenden Seite des Straßenfertigers (1) angeordnet sind.

14. Straßenfertiger nach einem der vorangehenden Ansprüche, **dadurch gekennzeichnet, dass** das Nivelliersystem (14) mit einer Speichereinheit (34) funktional verbunden ist, auf der für Dokumentationszwecke die während der Einbaufahrt erfassten Schichtdickenmesswerte speicherbar sind und/oder die erfasste Schichtdicke (31) an einem Außenbedienstand (17) des Straßenfertigers (1) mittels einer daran befestigten Anzeigeeinheit (19) visuell anzeigbar und/oder der Straßenfertiger (1) eine Übertragungseinheit (32) aufweist, mittels welcher die bestimmten Schichtdickenwerte an eine externe Einrichtung übermittelbar sind.

15. Verfahren zum Betreiben eines Straßenfertiger (1) nach einem der Ansprüche 1 bis 14, wobei für eine daran aufrufbare Nivelliersystemfunktion zum Ausgleichen von Untergrundunebenheiten (8) und für eine ferner daran aufrufbare Schichtdickenmessfunktion zum Bestimmen einer Schichtdicke (31) einer mittels des Straßenfertigers (1) hergestellten Einbauschicht (2) örtlich dieselben, am Straßenfertiger (1) angebauten Sensoreinheiten (10, 11, 16, 25) eingesetzt werden.

## Claims

1. Road finisher (1) for producing a paving layer (2) on a subgrade (3) on which the road finisher (1) moves along a paving direction (R) during a paving run, the road finisher (1) comprising a height-adjustable paving screed (4) for producing the paving layer (2) and a leveling system (14) configured to control a height of the paving screed (4), in order to compensate for unevenness (8) of the subgrade (3), wherein the leveling system (14) comprises a first measuring device (9) comprising at least a first sensor unit (10) configured to contactlessly measure at least a first distance (A1) to a surface (O1) of the subgrade (3) during the paving run and at least one second sensor unit (11) configured to contactlessly measure at least a second distance (A2) to a surface (O2) of the paving layer (2) produced on the subgrade (3) during the paving run, wherein the road finisher (1) is adapted to determine a reference level (12) based on the first and the second measured distance (A1, A2), on the basis of which a leveling actual value (13a, 13b) can be provided to the leveling system (14) for controlling the height of the paving screed (4), **characterized in that** the road finisher (1) is configured to further determine a layer thickness (31) of the paving layer (2) produced on the subgrade (3) based on the first distance (A1) measured by means of the first sensor unit (10) and on the second distance (A2) measured by means of the second sensor unit (11).

2. Road finisher according to claim 1, **characterized in that** the road finisher (1) is adapted to determine the layer thickness (31) solely by means of hardware components used on the road finisher for the leveling system (14).

3. Road finisher according to one of the preceding claims, **characterized in that** the distances (A1, A2) measured by means of the sensor units (10, 11) of the measuring device (9) can be used both as a basis for an automatic leveling (29) of the paving screed (4) and for a layer thickness measuring function.

4. Road finisher according to claim 3, **characterized in that** the automatic leveling (29) can be addressed on the road finisher (1) separately from or together with the layer thickness measuring function.

5. Road finisher according to one of the preceding claims, **characterized in that** the road finisher (1) provides for the leveling system (14) and the determination of the layer thickness (31) a common control device (30) integrally mounted on the road finisher (1).

6. Road finisher according to claim 5, **characterized in that** the control device (30) is configured to adjust, based on the actual leveling value (13a, 13b), a position of leveling cylinders (7) attached to the paving screed (4) at front traction points (6) for varying the layer thickness (31).

7. Road finisher according to one of the preceding claims, **characterized in that** the measuring device (9) comprises a supporting structure (15) for the first and second sensor units (10, 11) extending along the paving direction (R), on which supporting structure (15) the first sensor unit (10) is positioned in front of the paving screed (4) and the second sensor unit (11) is positioned behind the paving screed (4) in the paving direction (R).

8. Road finisher according to one of the preceding claims, **characterized in that** the measuring device (9) comprises a third (16) and a fourth sensor unit (25) for measuring respective distances (A3, A4) to the surface (O1) of the subgrade (3), said third and fourth sensor units (16, 25) being positioned in the paving direction (R) in front of the paving screed (4) on the supporting structure (15), and wherein the first, second, third and fourth sensor units (10, 11, 16, 25) are positioned in the paving direction (R) at a multiple of a predetermined distance (I) from one another on the supporting structure (15) of the measuring device (9)

9. Road finisher according to one of the preceding claims, **characterized in that** the road finisher (1) comprises at least one distance measuring means having a satellite-based (20) and a mechanical distance measuring unit (22) or providing at least one optical distance measuring unit (23).

10. Road finisher according to one of the preceding claims, **characterized in that** the sensor units (10, 11, 16, 25) each comprise an ultrasonic multi-sensor (27) having a plurality of sensor cells (28) arranged side by side, each adapted to perform distance measurements.

11. Road finisher according to claim 10, **characterized in that** the road finisher (1) is adapted to take into account the distance measurements detected by the sensor units (10, 11, 16, 25) by means of the respective sensor cells (28) formed on the sensor units, said distance measurements being tolerant with respect to a nominal distance measurement value which is variably adjustable for the respective sensor units (10, 11, 16, 25), when leveling the paving screed (4) and/or when determining the layer thickness (31).

12. Road finisher according to one of the preceding claims, **characterized in that** the currently determined layer thickness (31) or a layer thickness (31) averaged over a period of time therefrom can be provided to the leveling system (14) for controlling the height of the paving screed (4) as a further leveling actual value.

13. Road finisher according to one of the preceding claims, **characterized in that** the leveling system (14) provides a second measuring device, the first measuring device (9) being arranged in the paving direction (R) on one side of the road finisher (1) and the second measuring device being arranged in the paving direction (R) on an opposite side of the road finisher (1).

14. Road finisher according to one of the preceding claims, **characterized in that** the leveling system (14) is functionally connected to a memory unit (34), on which, for documentation purposes, the measured layer thickness values detected during the paving run can be stored and/or the detected layer thickness (31) can be displayed visually at an external operating stand (17) of the road finisher (1) by means of a display unit (19) attached thereto and/or the road finisher (1) has a transmission unit (32) by means of which the determined layer thickness values can be transmitted to an external device.

15. Method for operating a road finisher (1) according to one of the previous claims 1 to 14, wherein the same sensor units (10, 11, 16, 25) mounted on the road finisher (1) are used locally for a leveling system function which can be addressed thereon for compensating for subgrade unevenness (8) and for a layer thickness measuring function which can also be addressed thereon for determining a layer thickness (31) of a paving layer (2) produced by means of the road finisher (1).

## Revendications

1. Finisseur (1) permettant de produire une couche d'ouvrage (2) sur un substrat (3) sur lequel le finisseur (1) se déplace le long d'une direction d'ouvrage (R) pendant un trajet d'ouvrage, dans lequel le finisseur (1) présente une table de réglage (4) réglable en hauteur et permettant la réalisation de la couche d'ouvrage (2) et un système de nivellement (14) configuré pour commander une hauteur de la table de réglage (4) afin de compenser des irrégularités (8) du substrat (3), dans lequel le système de nivellement (14) comprend un premier dispositif de mesure (9) comprenant au moins une première unité de capteur (10) configurée pour mesurer sans contact pendant le trajet d'ouvrage au moins une première distance (A1) par rapport à une surface (O1) du substrat (3) et au moins une seconde unité de capteur (11) configurée pour mesurer sans contact pendant le trajet d'ouvrage au moins une seconde distance (A2) par rapport à une surface (O2) de la couche d'ouvrage (2) réalisée sur le substrat (3), dans lequel le finisseur (1) est conçu pour, en se basant sur les première et seconde distances (A1, A2) mesurées, déterminer un niveau de référence (12), sur la base duquel une valeur de nivellement effective (13) peut être mise à disposition du système de nivellement (14) pour commander la hauteur de la table de réglage (4), **caractérisé en ce que** le finisseur (1) est configuré pour, en se basant en outre sur la première distance (A1) mesurée au moyen de la première unité de capteur (10) et sur la seconde distance (A2) mesurée au moyen de la seconde unité de capteur (11), déterminer une épaisseur de couche (31) de la couche d'ouvrage (2) réalisée sur le substrat (3).

2. Finisseur selon la revendication 1, **caractérisé en ce que** le finisseur (1) est conçu pour déterminer l'épaisseur de couche (31) uniquement au moyen de composants matériels mis en place pour le système de nivellement (14).

3. Finisseur selon l'une quelconque des revendications précédentes, **caractérisé en ce que** les distances (A1, A2) mesurées au moyen des unités de capteur (10, 11) du dispositif de mesure (9) peuvent être utilisées à la fois comme base pour un système automatisé de nivellement (29) de la table de réglage (4) et pour une fonction de mesure d'épaisseur de couche.

4. Finisseur selon la revendication 3, **caractérisé en ce que**, au niveau du finisseur (1), le système automatisé de nivellement (29) peut être sollicité séparément ou en même temps que la fonction de mesure d'épaisseur de couche.

5. Finisseur selon l'une quelconque des revendications précédentes, **caractérisé en ce que** le finisseur (1) dispose, pour le système de nivellement (14) et la détermination de l'épaisseur de couche (31), d'un dispositif de commande (30) commun intégré d'un seul tenant au finisseur (1).

6. Finisseur selon la revendication 5, **caractérisé en ce que** le dispositif de commande (30) est configuré pour, en se basant sur la valeur de nivellement effective (13), ajuster la position de vérins de nivellement (7) fixés à la table de réglage (4) au niveau de points de traction avant (6) afin de faire varier l'épaisseur de couche (31).

7. Finisseur selon l'une quelconque des revendications précédentes, **caractérisé en ce que** le dispositif de mesure (9) présente une structure de support (15) destinée aux première et deuxième unités de capteur (10, 11) et s'étendant dans la direction d'ouvrage (R) et au niveau de laquelle la première unité de capteur (10) est positionnée devant la table de réglage (4) et la seconde unité de capteur (11) est positionnée derrière la table de réglage (4), dans la direction d'ouvrage (R).

8. Finisseur selon l'une quelconque des revendications précédentes, **caractérisé en ce que** le dispositif de mesure (9) présente une troisième unité de capteur (16) et une quatrième unité de capteur (25) afin de mesurer des distances (A3, A4) respectives par rapport à la surface (O1) du substrat (3), dans lequel les troisième et quatrième unités de capteur (16, 25) sont positionnées sur la structure de support (15) devant la table de réglage (4) dans la direction d'ouvrage (R) et dans lequel les première, deuxième, troisième et quatrième unités de capteur (10, 11, 16, 25) sont positionnées les unes par rapport aux autres à raison d'un multiple d'une distance prédéterminée (I) sur la structure de support (15) du dispositif de mesure (9) dans la direction d'ouvrage (R).

9. Finisseur selon l'une quelconque des revendications précédentes, **caractérisé en ce que** le finisseur (1) présente au moins un dispositif de mesure de distance comprenant une unité de mesure de distance par satellite (20) et une unité de mesure de distance mécanique (22) ou disposant d'au moins une unité de mesure de distance optique (23).

10. Finisseur selon l'une quelconque des revendications précédentes, **caractérisé en ce que** les unités de capteur (10, 11, 16, 25) présentent respectivement un multi-capteur à ultrasons (27) présentant une pluralité de cellules de capteur (28) agencées les unes à côté des autres et conçues respectivement pour mettre en oeuvre des mesures de distance.

11. Finisseur selon la revendication 10, **caractérisé en ce que** le finisseur (1) est conçu pour, lors de l'ajustement de nivellement de la table de réglage (4) et/ou lors de la détermination de l'épaisseur de couche (31), prendre en compte les mesures de distance enregistrées par les unités de capteur (10, 11, 16, 25), au moyen des cellules de capteur (28) respectives présentes sur celles-ci, et représentatives de la tolérance en ce qui concerne une valeur de mesure de distance souhaitée pouvant être ajustée de manière variable pour les unités de capteur (10, 11, 16, 25) respectives.

12. Finisseur selon l'une quelconque des revendications précédentes, **caractérisé en ce que** l'épaisseur de couche (31) actuellement déterminée ou une épaisseur de couche (31) moyennée sur une période de temps peut être mise à disposition du système de nivellement (14) en tant que valeur de nivellement effective supplémentaire pour commander la hauteur de la table de réglage (4).

13. Finisseur selon l'une quelconque des revendications précédentes, **caractérisé en ce que** le système de nivellement (14) dispose d'un second dispositif de mesure, dans lequel le premier dispositif de mesure (9) est agencé au niveau d'un côté du finisseur (1) dans la direction d'ouvrage (R) et le second dispositif de mesure est agencé au niveau d'un côté opposé du finisseur (1) dans la direction d'ouvrage (R).

14. Finisseur selon l'une quelconque des revendications précédentes, **caractérisé en ce que** le système de nivellement (14) est relié de manière fonctionnelle à une unité de mémoire (34) sur laquelle les valeurs de mesure d'épaisseur de couche enregistrées pendant le trajet d'ouvrage peuvent être stockées à des fins de documentation et/ou l'épaisseur de couche (31) enregistrée peut être indiquée de manière visuelle au niveau d'un poste de service externe (17) du finisseur (1) au moyen d'une unité d'affichage (19) fixée au niveau dudit poste et/ou le finisseur (1) présente une unité de transmission (32) au moyen de laquelle les valeurs d'épaisseur de couche déterminées peuvent être transmises à un dispositif externe.

15. Procédé de fonctionnement d'un finisseur (1) selon l'une quelconque des revendications 1 à 14, dans lequel les mêmes unités de capteur (10, 11, 16, 25) fixées au finisseur (1) sont utilisées localement pour une fonction de système de nivellement pouvant être appelée par le finisseur afin de compenser des irrégularités de substrat (8) et pour une fonction de mesure d'épaisseur de couche pouvant également être appelée par le finisseur afin de déterminer une épaisseur de couche (31) d'une couche d'ouvrage (2) réalisée au moyen du finisseur (1).
